# EUROPEAN PATENT SPECIFICATION

(11) **EP 0 474 328 B1**
(45) Date of publication and mention of the grant of the patent: **07.12.1994**
(21) Application number: 91303821.2
(22) Date of filing: 26.04.1991
(51) Int. Cl.: B60T 7/08

(54) **Vehicle hand-brake assembly**
Handbremsanordnung für ein Fahrzeug
Ensemble de frein à main pour un véhicule

(30) Priority: 06.09.1990 GB 9019505
(43) Date of publication of application: 11.03.1992
(73) Proprietor: Metallifacture Limited, Redhill Nottingham NG5 8PY (GB)
(72) Inventor: Parvinmehr, Hossein, Dr., Derbys DE3 4DT (GB)
(74) Representative: MacGregor, Gordon

(56) References cited:
- EP-A- 0 250 185
- FR-A- 1 598 549
- US-A- 3 939 727

## Description

This invention relates to a vehicle hand-brake assembly.

Hand-brake assemblies usually comprise a hand-actuable lever pivotally mounted on a support and having a brake-cable attached to the lever at a position spaced from the lever pivot, so that angular movement of the lever varies the tension in the brake-cable. In some designs, a hand-grippable lever is separate from a brake-lever, but actuates the latter to vary the brake-cable tension, as in GB-A-1223088.

It is usual to provide an arcuate rack of teeth on the support and a pawl pivotally carried by the lever and biased into engagement with the rack for holding the lever in angularly adjusted positions. A release mechanism is provided comprising a release button in the lever and connected with the pawl by a rigid connecting rod, so that depression of the button acts against the bias to release the pawl from the rack. GB-A-1223088 and US-A-3939727 provide examples. Other designs include a straight linearly movable rack connected with the lever and held in adjusted positions by a pawl. The pawl is again biased to engage the rack and a similar button-release mechanism is provided. An example is known from EP-A-0250185.

There is a problem with this type of release mechanism. It is possible to release the pawl, while there is high tension in the brake-cable, so that jumping of the pawl can occur over some of the teeth, with shock loading on the rack. This may damage the teeth, or dislodge the teeth where hardened tooth-inserts are used.

The present invention provides a release mechanism which overcomes this problem in a simple manner and provides a far smoother operation of the assembly.

The present invention provides a vehicle hand-brake assembly as claimed in Claim 1, in which the precharacterising part is based on US-A-3939727 and the distinguishing features of the invention are in the characterising part.

Reference is now made to the accompanying drawings, wherein:-
Fig 1 is a side elevation, partly in section, of one embodiment of a hand-brake assembly according to the invention;
Fig 2 is a side elevation, partly in section, of a second embodiment of a hand-brake assembly according to the invention;
Fig 3 is a side elevation, partly in section, of a third embodiment of a hand-brake assembly according to the invention; and
Fig 4 is an end elevation of the embodiment of Fig 3.

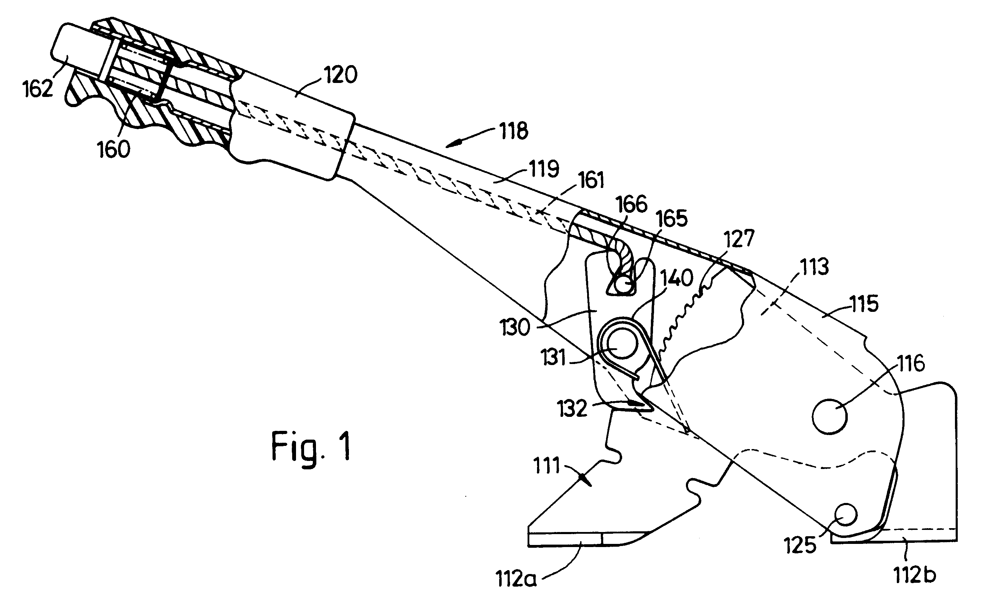

Referring to Fig 1, the assembly shown comprises a support 111 having base parts 112a,112b and an upright plate 113. A lever 115 is pivotally mounted on the support plate 113 by a pivot pin 116 and is generally of channel shape, with the support plate received in the channel. A hand-grippable member 118 comprises a part 119 integrally formed with the lever 115 and carrying a cover 120. A connector 125 is provided on the lever 115 for connection to a brake-cable (not shown), so that lifting of the hand-grippable member 118 rotates the lever 115 about the pin 116 and tensions the brake-cable.

Retaining means is provided for holding the connector 125 in adjusted position, relative to the support 111. The retaining means comprises an arcuate rack 127 of teeth, on the support plate 113 and concentric with the pivot pin 116, and a pawl 130 pivotally mounted on the lever 115 by a pivot member 131 and having a tooth 132 engageable with the teeth of the rack 127 in the brake-engaged positions of the pawl. The pawl is shown disengaged from the teeth, in the parked position of the lever, with the brake disengaged.

A release mechanism includes a torsion spring 140 biasing the pawl away from engagement with the rack towards a release position. The release mechanism includes actuable means in the form of a button 162 protruding from the free end of the hand-grippable member 118. The button is urged to that position by tensioning means in the form of a compression spring 160 and is secured to one end of linking element in the form of a flexible release cable 161. The cable could be integrally moulded with the button. The opposite end of the cable 161 has a head 165, which is releasably fitted in a dove-tail slot 166 in the pawl 130 to attach the cable to the pawl. The compression spring 160 tensions the release cable 161, so as to bias the pawl 130 into engagement with the rack 127. The bias of the compression spring 160 over-rides the bias of the torsion spring 140, so that the pawl is normally engaged with the rack.

The release mechanism is operated by pressing the button 162 to release tension in the release cable 161 sufficiently to permit the torsion spring 140 to take the pawl out of engagement with the rack.

Tension in the brake-cable acts to urge the pawl 130 into tight engagement with the teeth of the rack 127. The force exerted by the torsion spring 140 is small and tension in the brake-cable prevents release of the pawl, if the button 162 is not depressed. The pawl will only be released, under the bias of the torsion spring, when sufficient lifting force has been applied to the hand-grippable member 118 substantially to overcome the tension in the brake-cable.

There is, therefore, a smooth release action, without risk of the pawl jumping along the rack and causing shock damage.

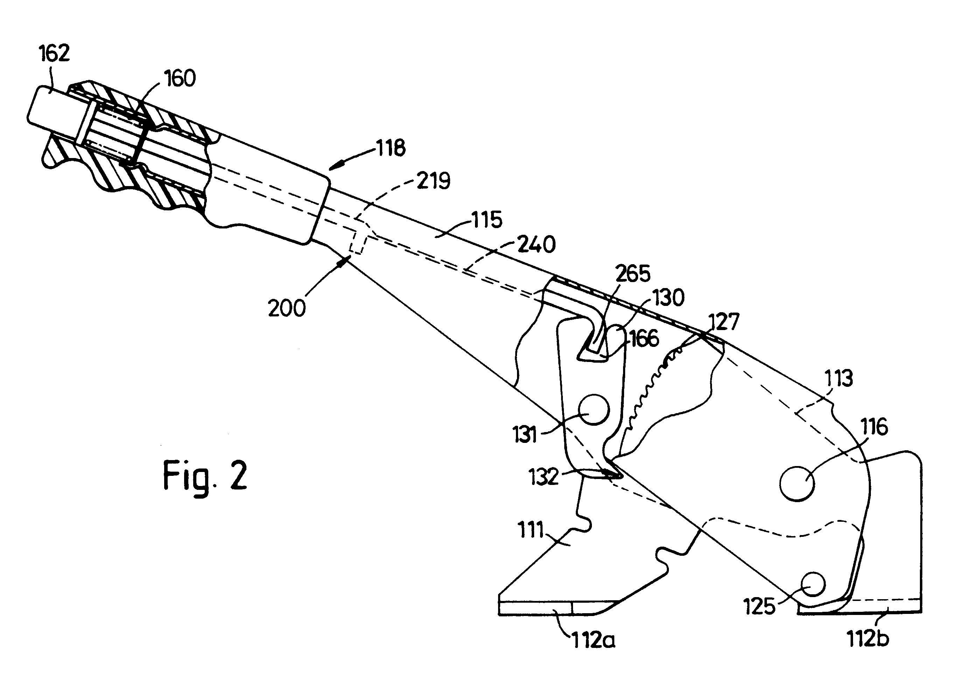

The embodiment of Fig 2 is of similar construction to that of Fig 1 and the same numerals have been used for similar parts. There are differences, however, in the construction and operation of the release mechanism.

In this embodiment, the release cable is replaced by a more rigid linking element 219, integrally moulded from plastics material with the button 162. The linking element has a cranked end portion 265, opposite to the button 162, received in the dove-tail slot 166 of the pawl 130. A projection 200 on the linking element 219 prevents rotation of the element by engaging side walls of the channel-shaped lever 115.

The torsion spring is replaced by a resilient portion 240 of the linking element 219. The resilient portion is defined by a relatively thin portion of the linking element.

The compression spring 160 acts on the button 162 and tensions the linking element, so as to urge the pawl 130 into engagement with the rack 127.

The release mechanism is operated by pressing the button 162 to release tension in the linking element and to cause the element positively to move the pawl 130 out of engagement with the rack 127. The release mechanism will not, however, operate until sufficient lifting force has been applied to the hand-grippable member 118 substantially to overcome the tension in the brake-cable. The resilient portion 240 of the linking element 219 otherwise collapses when the button is depressed. There is sufficient resilience in the portion 240 to ensure that collapse does not occur when the brake-cable tension is released.

It is envisaged that spring means could be used in place of the resilient portion 140.

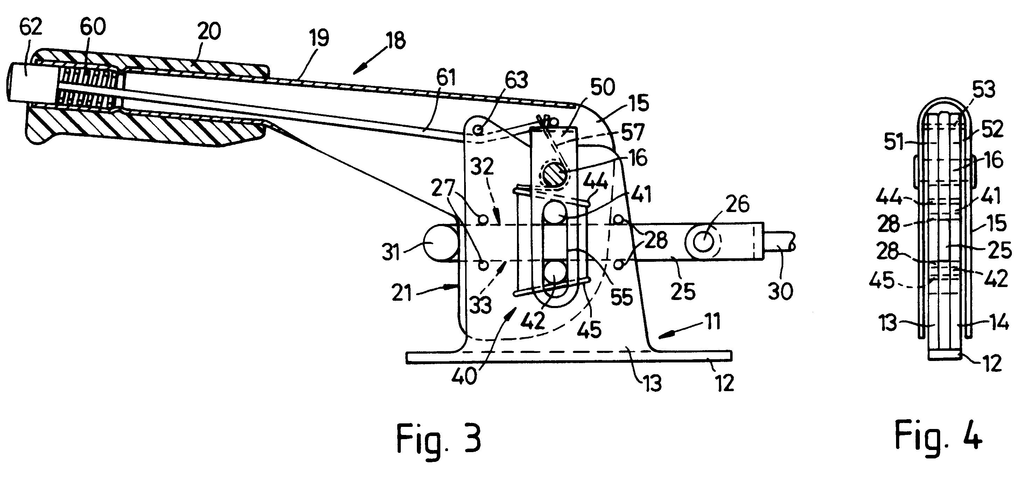

The third embodiment of Figs 3 and 4 comprises a support 11 having a base 12 and parallel, spaced, upright support plates 13,14. A lever 15 is pivotally mounted on the support plates by a pivot pin 16 and is generally of channel shape with the support plates received in the channel. A hand-grippable member 18 comprises a part 19 integrally formed with the lever 15 and carrying a cover 20. The lever is provided with cam surfaces 21 on the support plates 13,14.

An elongate member 25 is mounted between the support plates 13, 14 and is linearly and longitudinally movable, generally parallel to the base 12 between guide pins 27,28, bridging the support plates. The elongate member has means 26 attaching the member to a brake-cable 30. The member has transverse end projections defining cam followers 31, which engage the cam surfaces 21.

The arrangement is such that lifting of the hand-grippable member 18 pivots the lever 15 about the pivot pin 16 to cause the cam surfaces 21 to ride along the cam followers 31, so as to urge the member 25 linearly in the brake-cable tensioning direction.

The elongate member 25 can be retained in a brake-cable tensioned position by retaining means in the form of a clamping device 40. The device comprises a pair of rollers 41,42, which engage with respective upper and lower surfaces 32,33 of the member 25 and can roll along these surfaces. Each roller is captivated between the respective surface 32,33 of the member and a respective guide surface 44,45 on the support 11. The guide surfaces converge in the direction towards the brake cable 30 and also converge relative to the upper and lower surfaces, 32,33 of the elongate member. The arrangement is such that the brake-cable tension urges the rollers into wedged positions between the guide surfaces 44,45 and the elongate member 25, to clamp the member to the support. The member can be adjusted in the brake-tensioning direction by cam action of the lever 15, but on release of the lever, the element is automatically clamped in the adjusted position.

A release mechanism for the retaining means includes a pivoted element 50 of channel form with parallel, spaced arms 51,52 and a bridging part 53. Each arm 51,52 has an elongate slot 55 each of which receives respective ends of the rollers 44,45. The pivoted element is pivoted about the pivot pin 16. A torsion spring 57, about the pin 16, biases the pivoted element 50 in the direction in which the rollers are urged out of their wedging positions.

The bias of the torsion spring 57 is over-ridden by the bias of a compression spring 60 acting on the pivoted element 50 through a flexible release cable 61, which is connected to the element 50 and is tensioned by the spring 60. The spring 60 also urges a button 62 to a position protruding from the free end of the hand-grippable member 19. The release cable 61 is guided around a guide pin 63 on the support 11, the pin being positioned so that tension in the release cable 61 is maintained as the hand-grippable member 18 is moved angularly from the parked position through operative positions.

The release mechanism is actuated by depression of the button 62 against the bias of the compression spring 60, so as to release the tension in the release cable 61. The torsion spring then angularly moves the pivoted element to release the rollers from their wedged positions, so that the elongate member 25 is movable under brake-cable tension to release the brakes.

The release mechanism is inoperative in the parked position and cannot be operated until the hand-grippable member 18 has been lifted sufficiently to overcome the brake-cable tension, since the torsion spring 57 provides a small release force relative to the brake-cable tension.

## Claims

1. A vehicle hand-brake assembly comprising a support (111,11), a lever (115,15) angularly movable relative to the support, a hand-grippable member (118,18) for effecting angular movement of the lever, connecting means (125,26) for connection with a brake-cable (30) and movable by the lever, whereby angular movement of the lever (115,15) in an actuating direction tensions the brake-cable, retaining means for holding the connecting means (125,26) in adjusted positions relative to the support and including a retaining element (130,40) engageable with a member (127,25) on the support and held in engagement under brake-cable tension, and release means for releasing the retaining element (130,40) from engagement with the member (127,25), the release means including actuable means (162,62) and a linking element (161,219,61) between the actuable means (162,62) and the retaining element (130,40), tensioning means (160,60) acting on the linking element (161,219,61) to tension the latter to urge the retaining element (130,40) into engagement with the member (127,25), the actuable means (162,62) being actuable to effect movement of the retaining element out of engagement with the member, characterised in that the linking element (16,219,61) includes a flexible or resilient portion, and by biasing means (140,240,57) acting on the retaining element (130,40) in the direction to urge the retaining element (130,40) out of engagement with the member (127,25), in that when the effect of the brake-cable tension has been removed from the retaining element.

2. A vehicle hand-brake assembly according to Claim 1, wherein the actuable means (162) is actuable positively to move the retaining element (130) out of engagement with the member (127) and the biasing means (240) is provided in the linking element (219), the biasing means (240) being resiliently collapsible under resistance to movement of the retaining element (130).

3. A vehicle hand-brake assembly according to Claim 2, wherein the biasing means (240) is an integral part of the linking element (219), which is an elongate plastics moulding having a relatively thin portion defining the biasing means.

4. A vehicle hand-brake assembly according to Claim 3, wherein the actuable means comprises a depressable button (162) integrally formed with the linking element (219).

5. A vehicle hand-brake assembly according to Claim 1, wherein the linking element is a flexible cable (161,61), the actuable means (162,62) is actuable to release tension in the cable, and the biasing means moves the retaining element (130,40) out of engagement with the member (127,25) when the tension in the cable has been released and the effect of the brake-cable tension has been removed from the retaining element.

6. A vehicle hand-brake assembly according to Claim 5, wherein the retaining element (130,40) is mounted for angular movement and the biasing means comprises a torsion spring (140,57).

7. A vehicle hand-brake assembly according to Claim 5 or 6, including a guide member (63) on the support for the tensioned cable (61) arranged to maintain tension in the cable as the lever (15) is angularly moved.

8. A vehicle hand-brake assembly according to any preceding claim, wherein said member (25) on the support (11) comprises an elongate member (25) carrying the connecting means (26) and mounted on the support for movement in the actuating direction by the lever (15).

9. A vehicle hand-brake assembly according to any preceding claim wherein the retaining element is a pawl (130) and said member on the support is a rack (127).

10. A vehicle hand-brake assembly according to any one of Claims 1 to 8 wherein the retaining element is a clamping element (40) having wedge engagement with said member (26) on the support (11).

## Patentansprüche

1. Handbremsanordnung für ein Fahrzeug, mit einer Tragplatte (111, 11), einem gegenüber der Tragplatte winkelbeweglichen Hebel (115, 15), einem Handgriff (118, 18) für die Winkelbewegung des Hebels, einem Anschluß (125, 26) für die Verbindung zum Bremskabel (30) und die Bewegung durch den Hebel, wobei eine Winkelbewegung des Hebels (115, 15) in der Betätigungsrichtung zum Spannen des Bremskabels führt, Mitteln zum Halten der Anschlüsse (125, 26) in der eingenommenen Stellung relativ zur Tragplatte unter Einschluß eines mit einem Sperrteil (127, 25) auf der Trägerplatte in Wirkkontakt tretenden und unter der Spannung des Bremskabels in Kontakt gehaltenen Verriegelungselementes (130, 40), und mit Lösemitteln zum Lösen des Verriegelungselementes (130, 40) von dem Sperrteil (127, 25), wobei die Lösemittel Betätigungsmittel (162, 62) und ein Verbindungselement (161, 219, 61) zwischen den Betätigungsmitteln (162, 62) und dem Verriegelungselement (130, 40) und auf das Verbindungselement (161, 219, 61) wirkende Spannmittel (160, 60) zum Beaufschlagen des Verriegelungselementes (130, 40) in Anlage an dem Sperrteil (127, 25) aufweisen und die Betätigungsmittel (162, 62) zum Lösen des Verriegelungselementes von dem Sperrteil betätigbar sind, **dadurch gekennzeichnet**, **daß** das Verbindungselement (161, 219, 61) einen flexiblen oder nachgiebigen Bereich ausweist, und daß eine auf das Verriegelungselement (130, 40) einwirkende Feder (140, 240, 57) vorgesehen ist, die in Löserichtung auf das Verriegelungselement (130, 40) von dem Sperrteil (127, 25) einwirkt, wenn die Spannung des Bremskabels von dem Verriegelungselement genommen wird.

2. Handbremsanordnung nach Anspruch 1, **dadurch gekennzeichnet**, **daß** das Betätigungsmittel (162) positiv betätigbar ist, um das Verriegelungselement (130) außer Kontakt von dem Sperrteil (127) zu bringen, und daß die Feder (240) an dem Verbindungselement (219) vorgesehen ist, wobei die Feder (240) unter dem Widerstand der Bewegung des Verriegelungselementes (130) nachgiebig ist.

3. Handbremsanordnung nach Anspruch 2, **dadurch gekennzeichnet**, **daß** die Feder (240) integraler Bestandteil des Verbindungselementes (219) ist, das als längliches Formteil aus Kunststoff ausgebildet ist und einen relativ dünnen Bereich aufweist, die die Feder bildet.

4. Handbremsanordnung nach Anspruch 3, **dadurch gekennzeichnet**, **daß** das Betätigungsmittel einen niederdrückbaren Knopf (162) aufweist, der intergaler Bestandteil des Verbindungselementes (219) ist.

5. Handbremsanordnung nach Anspruch 1, **dadurch gekennzeichnet**, **daß** das Verbindungselement ein flexibles Kabel (161, 61) ist, daß das Betätigungsmittel zum Nachlassen der Spannung in dem Kabel betätigbar ist, und daß die Feder das Verriegelungselement (130, 40) außer Kontakt von dem Sperrteil (127, 25) bringt, wenn die Spannung in dem Kabel beseitigt ist und die Einwirkung der Spannung des Bremskabels von dem Verriegelungselement (130, 40) genommen ist.

6. Handbremsanordnung nach Anspruch 5, **dadurch gekennzeichnet**, **daß** das Verriegelungselement (130, 40) als winkelbewegliches Teil ausgebildet ist und daß die Feder eine Torsionsfeder (140, 57) ist.

7. Handbremsanordnung nach Anspruch 5 oder 6, **dadurch gekennzeichnet**, **daß** auf der Trägerplatte ein Führungsbolzen (63) für das gespannte Lösekabel (61) so angeordnet ist, daß bei Winkelbewegungen des Hebels (15) die Spannung in dem Lösekabel erhalten bleibt.

8. Handbremsanordnung nach einem der vorangehenden Ansprüche, **dadurch gekennzeichnet**, **daß** das Sperrteil (25) auf der Trägerplatte (11) länglich ausgebildet ist, den Anschluß (26) trägt und auf der Trägerplatte beweglich in der Betätigungsrichtung des Hebels (15) angeordnet ist.

9. Handbremsanordnung nach einem der vorangehenden Ansprüche, **dadurch gekennzeichnet**, **daß** das Verriegelungselement eine Klinke (130) und das Sperrteil auf der Trägerplatte ein Zahnsegment (127) ist.

10. Handbramsanordnung nach einem der Ansprüche 1 bis 8, **dadurch gekennzeichnet**, **daß** das Verriegelungselement eine Verriegelungseinrichtung (40) mit einem Keil ist, der mit dem Anschluß (26) auf der Trägerplatte (11) in Kontakt kommt.

## Revendications

1. Système de frein à main pour véhicule, comprenant un support (111,11), un levier (115,15) pouvant être déplacé angulairement par rapport au support, un élément (118,18) pouvant être saisi à la main pour réaliser un déplacement angulaire du levier, un moyen de raccordement (125,26) pour réaliser un raccordement avec un câble (30) de frein et pouvant être actionné par le levier, grâce à quoi le déplacement angulaire du levier (115,15) dans le sens de l'actionnement tend le câble de frein, un moyen de retenue pour retenir le moyen de raccordement (125,26) dans des positions réglées par rapport au support et comportant un élément de retenue (130,40) pouvant coopérer avec un élément (127,25) présent sur le support et maintenu enclenché du fait de la tension du câble de frein, et un moyen de desserrage pour dégager l'élément de retenue (130,40) par rapport à l'élément (127,25), le moyen de desserrage comportant un moyen actionnable (162,62) et un élément de liaison (161,219,61) entre le moyen actionnable (162,62) et l'élément de retenue (130,40), un moyen de tension (160,60) agissant sur l'élément de liaison (161,219,61) afin de tendre ce dernier pour pousser l'élément de retenue (130,40) au contact de l'élément (127,25), le moyen actionnable (162,62) étant actionnable pour réaliser le déplacement de l'élément de retenue afin de le dégager de l'élément (127,25), caractérisé en ce que l'élément de liaison (16,219,61) comporte une partie souple ou élastique, et par un moyen de sollicitation (140,240,57) agissant sur l'élément de retenue (130,40) dans un sens servant à pousser l'élément de retenue (130,40) pour le dégager de l'élément (127,25), une fois que l'élément de retenue ne subit plus l'effet de la tension du câble de frein.

2. Système de frein à main pour véhicule selon la revendication 1, dans lequel le moyen actionnable (162) peut être actionné directement pour dégager l'élément de retenue (130) par rapport à l'élément (127), et le moyen de sollicitation (240) est disposé dans l'élément de liaison (219), le moyen de sollicitation (240) pouvant s'écraser d'une manière élastique du fait de la résistance au déplacement de l'élément de retenue (130).

3. Système de frein à main pour véhicule selon la revendication 2, dans lequel le moyen de sollicitation (240) fait corps avec l'élément de liaison (219), qui est une pièce moulée allongée en matière plastique ayant une partie relativement mince qui définit le moyen de sollicitation.

4. Système de frein à main pour véhicule selon la revendication 3, dans lequel le moyen actionnable comporte un bouton (162) pouvant être enfoncé, faisant corps avec l'élément de liaison (219).

5. Système de frein à main pour véhicule selon la revendication 1, dans lequel l'élément de liaison est un câble souple (161,61), le moyen actionnable (162,62) peut être actionné pour supprimer la tension dans le câble, et le moyen de sollicitation libère l'élément de retenue (130,40) par rapport à l'élément (127,25) lorsque la tension du câble a été supprimée et que l'élément de retenue ne subit plus l'effet de la tension du câble de frein.

6. Système de frein à main pour véhicule selon la revendication 5, dans lequel l'élément de retenue (130,40) est monté pour se déplacer angulairement et le moyen de sollicitation comporte un ressort de torsion (140,57).

7. Système de frein à main pour véhicule selon la revendication 5 ou 6, comprenant un élément de guidage (63) présent sur le support pour le câble tendu (61), agencé afin de maintenir la tension dans le câble lorsque le levier (15) est déplacé d'une manière angulaire.

8. Système de frein à main pour véhicule selon l'une quelconque des revendications précédentes, dans lequel ledit élément (25) sur le support (11) comprend un élément allongé (25) portant le moyen de raccordement (26) et monté sur le support afin de se déplacer dans le sens de l'actionnement par le levier (15).

9. Système de frein à main pour véhicule selon l'une quelconque des revendications précédentes, dans lequel l'élément de retenue est un cliquet (130) et ledit élément sur le support est une crémaillère (127).

10. Système de frein à main pour véhicule selon l'une quelconque des revendications 1 à 8, dans lequel l'élément de retenue est un élément de serrage (40) venant se coincer avec ledit élément (26) sur le support (11).
